# EUROPÄISCHE PATENTANMELDUNG

(11) **EP 3 726 444 A1**
(43) Veröffentlichungstag der Anmeldung: **21.10.2020**
(21) Anmeldenummer: 19170165.5
(22) Anmeldetag: 18.04.2019
(51) Int. Cl.: G06Q 10/08

(54) **VERFAHREN UND SYSTEM ZUR BEREITSTELLUNG VON TRANSPORTGUTINFORMATION SOWIE ZUR IDENTIFIKATION VON TRANSPORTGUTBEHÄLTERN**

(71) Anmelder: Siemens Aktiengesellschaft, 80333 München (DE)
(72) Erfinder: KAMPKA, Thomas, 78462 Konstanz (DE); SCHMITT, Pierre, 88662 Überlingen (DE)
(74) Vertreter: Maier, Daniel Oliver

(57) **Zusammenfassung**

Die vorliegende Erfindung betrifft ein Verfahren (1) und ein System (8) zur Bereitstellung von Transportgutinformation sowie ein Verfahren (13) und ein System (14) zur Identifikation von Transportgutbehältern (2) auf Grundlage solcher Transportgutinformation. Es wird wenigstens ein Merkmal (M1, M2), welches zumindest einen Teil eines Inhalts eines Transportgutbehälters (2) charakterisiert, aus Durchleuchtungsdaten (3), die beim Durchleuchten (S1) des Transportgutbehälters (2) erzeugt werden, extrahiert (S2). Erfindungsgemäß wird das extrahierte Merkmal (M1, M2) in einer zentralen Datenbank (11) gespeichert (S3).

## Beschreibung

Die vorliegende Erfindung betrifft ein Verfahren und ein System zur Bereitstellung von Transportgutinformation sowie ein Verfahren und ein System zur Identifikation von Transportgutbehältern auf Grundlage solcher Transportgutinformation.

Beim Transport von Transportgutbehältern, beispielsweise Gepäckstücken wie Koffern, Taschen oder Rucksäcken, insbesondere mittels Flugzeug, kommt es immer wieder zum Verlust einzelner Transportgutbehälter. Das Wiederauffinden verlorener Transportgutbehälter und insbesondere das Herstellen einer Zuordnung von verlorenem Transportgutbehälter zu seinem Besitzer basiert in der Regel auf einer vom Besitzer abgegebenen Beschreibung. Problematisch dabei ist, dass sich viele Transportgutbehälter nur schlecht voneinander unterscheiden lassen, zum Beispiel aufgrund sehr ähnlicher Bauweise. So ist etwa der schwarze Trolley mit Rollen und ausziehbarem Griff sehr weit verbreitet und dadurch schwierig eindeutig zu identifizieren bzw. schwierig einem Besitzer zuzuordnen.

Es ist eine Aufgabe der Erfindung, die Identifikation von Transportgutbehältern zu erleichtern.

Diese Aufgabe wird gelöst durch ein Verfahren und ein System zur Bereitstellung von Transportgutinformation sowie ein Verfahren und ein System zur Identifikation von Transportgutbehältern auf Grundlage solcher Transportgutinformation gemäß den unabhängigen Ansprüchen.

Bei einem Verfahren zur Bereitstellung von Transportgutinformation gemäß einem ersten Aspekt der Erfindung wird wenigstens ein Merkmal, welches zumindest einen Teil eines Inhalts eines Transportgutbehälters charakterisiert, aus Durchleuchtungsdaten, die beim Durchleuchten des Transportgutbehälters erzeugt werden, extrahiert. Erfindungsgemäß wird das extrahierte Merkmal in einer zentralen Datenbank gespeichert.

Ein Aspekt der Erfindung basiert auf dem Ansatz, eine Identifikation eines Transportgutbehälters, zum Beispiel eines Gepäckstücks wie eines Koffers, einer Tasche oder eines Rucksacks, anhand einer Beschreibung bzw. Informationen bezüglich des Inhalts des Transportgutbehälters zu ermöglichen. Zu diesem Zweck wird der Transportgutbehälter vorzugsweise durchleuchtet, zum Beispiel mittels Röntgenstrahlung, und dabei Durchleuchtungsdaten, beispielsweise in Form eines Röntgenbilds, erzeugt. Aus den Durchleuchtungsdaten kann wenigstens ein Merkmal extrahiert werden, welches zumindest einen Teil des Inhalts des Transportgutbehälters charakterisiert. Das Merkmal stellt in bevorzugter Weise eine Transportgutinformation dar.

Bei dem wenigstens einen Merkmal handelt es sich bevorzugter Weise um ein Alleinstellungsmerkmal, auf dessen Grundlage der Transportgutbehälter identifizierbar ist. Beispielsweise kann wenigstens ein spezifischer Gegenstand, vorzugsweise dessen spezifische Ausprägung wie zum Beispiel Größe, Form, Material (etwa in Form seines Kontrastes im Röntgenbild), Struktur und/oder dergleichen, erkannt werden. Diese Information wird in bevorzugter Weise, insbesondere in Form des extrahierten Merkmals, in einer zentralen Datenbank gespeichert, beispielsweise auf einem zentralen, z.B. mit dem Internet verbundenen, Server. Vorzugsweise steht diese Information damit zur späteren Identifikation des Transportgutbehälters, insbesondere ortsunabhängig, zur Verfügung.

Das vorgeschlagene Verfahren ist besonders vorteilhaft, da es oftmals ohne eine Änderung der Infrastruktur zum Wiederauffinden verloren gegangener Transportgutbehälter verwendet werden kann. Üblicherweise werden Transportgutbehälter, z.B. an Flughäfen vor dem Beladen der Flugzeuge, aus Sicherheitsgründen durchleuchtet, z.B. mittels sog. HBS-Anlagen (hold baggage screening). Die dabei erzeugten Durchleuchtungsdaten können leicht zur Extraktion des wenigstens einen Merkmals herangezogen und dieses in der zentralen Datenbank gespeichert werden.

Sollte der Transportgutbehälter verloren gehen, zum Beispiel weil am Transportgutbehälter befestigte Transportpapiere wie ein Bag-Tag abhanden kommen oder beschädigt werden, kann der Transportgutbehälter ein wiederholtes Mal durchleuchtet und anhand eines Vergleichs des dabei wenigstens einen extrahierten Merkmals mit bereits in der Datenbank gespeicherten Merkmalen identifiziert und zum Beispiel anhand von beim ersten Durchleuchten mit dem wenigstens einen Merkmal in der zentralen Datenbank gespeicherten Besitzinformationen mit dem Besitzer in Verbindung gebracht werden.

Es wird somit eine zuverlässige und automatisierte Identifikation von Transportgutbehältern ermöglicht.

Die Erfindung ist dabei nicht nur auf den Transport von Gepäckstücken, insbesondere Fluggepäckstücken, beschränkt. Es ist auch denkbar, das vorgeschlagene Verfahren auch im Rahmen des Transports von Containern, z.B. mittels Schiffen, oder beim Postversand von Paketen anzuwenden.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform wird aus den Durchleuchtungsdaten eine Merkmalskombination aus Merkmalen verschiedener Gegenstände extrahiert. Z.B. können Form und Größe von zwei oder mehr unterschiedlichen Gegenständen erfasst werden. Bestimmte Kombinationen von Gegenständen treten in der Regel nur mit geringer Wahrscheinlichkeit gleichzeitig in mehreren Transportgutbehältern auf. Dadurch kann die Zuverlässigkeit bei der Identifikation des Transportgutbehälters weiter erhöht werden. In bevorzugter Weise wird daher der Transportgutbehälter auf Grundlage der Merkmalskombination identifiziert.

Dabei ist es denkbar, dass mehrere Merkmale, die jeweils mit verschiedenen Gegenständen korrespondieren, extrahiert und eine Kombination aus denjenigen Merkmalen in der Datenbank gespeichert wird, welche statistisch eine besonders geringe Häufigkeit besitzt. Beispielsweise kann für verschiedene Kombinationen jeweils ein Wert eines Häufigkeitsmaßes ermittelt werden, welches die Häufigkeit der entsprechenden Kombination charakterisiert. Vorzugsweise wird dann diejenige Merkmalskombination gespeichert, welche mit dem geringsten Wert korrespondiert. Dies erlaubt eine besonders zuverlässige, insbesondere eindeutige, Charakterisierung des Inhalts und damit Identifikation des Transportbehälters.

In einer weiteren bevorzugten Ausführungsform wird das extrahierte Merkmal für eine erste vorbestimmte Zeitdauer gespeichert. Insbesondere kann eine Transportdauer ermittelt werden, für welche der Transportbehälter transportiert wird. Vorzugsweise wird das extrahierte Merkmal dann wenigstens für die ermittelte Transportdauer gespeichert. Insbesondere kann das extrahierte Merkmal für eine Zeitdauer, die auf Grundlage der ermittelten Transportdauer bestimmt wird, gespeichert werden. Zum Beispiel kann die ermittelte Transportdauer mit einem vorbestimmten Faktor, z.B. 1,2, vorzugsweise 1,5, besonders bevorzugt 2, multipliziert werden, um die Zeitdauer zu ermitteln. Dadurch kann sichergestellt werden, dass die Transportgutinformation, anhand welcher der Transportbehälter bei einem Verlust identifiziert werden kann, bei Feststellung des Verlusts noch verfügbar ist, selbst wenn der Verlust erst einige Zeit nach Ablauf der Transportdauer bemerkt wird.

Beispielsweise kann das extrahierte Merkmal oder die extrahierte Merkmalskombination für eine erste vorbestimmte Zeitdauer von 24 bis 48 Stunden, vorzugsweise von 30 bis 42 Stunden, insbesondere etwa 36 Stunden, gespeichert werden. Dadurch kann die Transportgutinformation z.B. bei Flugreisen in zuverlässiger Weise bis zur Ankunft eines Passagiers oder sogar darüber hinaus an einem Zielflughafen verfügbar gemacht werden.

In einer weiteren bevorzugten Ausführungsform werden personenbezogene Daten mit dem extrahierten Merkmal gespeichert. Insbesondere kann der Transportgutbehälter einer transportierten Person zugeordnet werden. Auf diese Person bezogene Daten werden dann vorzugsweise ebenfalls in der zentralen Datenbank gespeichert und mit dem extrahierten Merkmal und somit mit dem Transportgutbehälter verknüpft. Dies ermöglicht es, einen verloren gegangenen Transportgutbehälter zuverlässig einer Person zuzuordnen und gegebenenfalls bereitzustellen.

Beispielsweise kann das wenigstens eine extrahierte und in der Datenbank gespeicherte Merkmal, welches mit einem von einem Flugreisenden mitgeführten Gepäckstück korrespondiert, mit der auf einem Bag-Tag vorhandenen Informationen bezüglich Name und/oder Fluggastnummer, Zielflughafen und/oder dergleichen verknüpft werden. Selbst wenn das Bag-Tag verloren geht oder beschädigt wird, zum Beispiel abreißt, kann auf diese Information über die Datenbank zugegriffen werden, insbesondere indem das Gepäckstück anhand des wenigstens einen Merkmals identifiziert wird.

In einer weiteren bevorzugten Ausführungsform wird dem Transportgutbehälter ein Verlustzustand zugeordnet, beispielsweise wenn ein Besitzer des Transportgutbehälters diesen als verloren meldet oder wenn ein Transportgutbehälter zum Beispiel an einem Flughafen ohne Bag-Tag aufgefunden wird. Vorzugsweise wird dann eine entsprechende Zustandskennung in der zentralen Datenbank mit dem gespeicherten Merkmal verknüpft. Dadurch kann zum Beispiel eine Suche nach vermissten Transportgutbehältern auf entsprechend als verloren gekennzeichnete Transportgutbehälter beschränkt werden, was eine Erhöhung der Sucheffizienz ermöglicht.

Beispielsweise können Fluggäste, deren Gepäckstücke nicht an der Gepäckausgabe ausgegeben werden, ihre Gepäckstücke als vermisst bzw. verloren melden. Die im Zusammenhang mit den Gepäckstücken aus den Durchleuchtungsdaten extrahierten Merkmale, die in der Datenbank gespeichert sind, können daraufhin mit entsprechenden Zustandskennungen verknüpft werden. Das Merkmal eines aufgefundenen Gepäckstücks kann dann leicht mit den Merkmalen der durch die Zustandskennung als verloren gekennzeichneten Gepäckstücke verglichen und so schnell als eines der verlorenen Gepäckstücke identifiziert werden.

In einer weiteren bevorzugten Ausführungsform wird das extrahierte Merkmal in Abhängigkeit eines dem Transportgutbehälter zugeordneten Verlustzustands zusätzlich zur Transportdauer für eine vorbestimmte zusätzliche Zeitdauer gespeichert. Beispielsweise kann Transportinformation in Form des wenigstens einen extrahierten Merkmals eines als verloren gekennzeichneten Transportgutbehälters auch über eine Transportdauer hinaus gespeichert werden, etwa um eine Identifikation bei einem späteren Auffinden zu ermöglichen.

Es ist etwa denkbar, dass Merkmale eines als verloren gekennzeichneten Transportgutbehälters nach Ablauf der Transportdauer für weitere 24 bis 48 Stunden, vorzugsweise weitere 30 bis 42 Stunden, insbesondere für weitere 36 Stunden, gespeichert werden. Dadurch kann zum Beispiel ein Fluggepäckstück auch durch erneutes Durchleuchten und Extrahieren des Merkmals und einen Vergleich mit in der Datenbank gespeicherten Merkmalen wiedergefunden werden, wenn es versehentlich einem falschen Flug zugeordnet wurde und erst dann als verlorenes Gepäckstück erkannt wird, wenn es nach einem langen Flug an einem anderen Flughafen ankommt.

In einer weiteren bevorzugten Ausführungsform werden Transportdaten, welche den Transportgutbehälter charakterisieren, in der zentralen Datenbank gespeichert und mit dem extrahierten Merkmal und somit auch mit dem Transportgutbehälter verknüpft. Beispielsweise können Angaben eines Besitzers des Transportgutbehälters zum Transportgutbehälter wie zum Beispiel zur Größe, Form, Farbe, Struktur, Defekten und/oder dergleichen erfasst und als Transportdaten in der Datenbank gespeichert werden. Diese ermöglicht eine besonders zuverlässige Identifikation des Transportgutbehälters zu einem späteren Zeitpunkt.

Es ist etwa denkbar, dass der Besitzer bei Feststellung über den Verlust des Transportgutbehälters, zum Beispiel seines Fluggepäcks, einen Fragebogen ausfüllt und seine Antworten als Transportdaten erfasst und in Datenbank gespeichert werden. Gleichzeitig kann dem Transportgutbehälter ein Verlustzustand zugeordnet werden, welcher beim Auffinden von Transportgutbehältern die Identifikation beschleunigen kann. Wird der Transportgutbehälter gefunden, kann zusätzlich zum Vergleich der Merkmale die Übereinstimmung der Transportdaten D überprüft werden.

In einer weiteren bevorzugten Ausführungsform wird wenigstens eines der Folgenden in der zentralen Datenbank gespeichert und mit dem extrahierten Merkmal und somit auch mit dem Transportgutbehälter verknüpft: (i) Fluggastnummer; (ii) Flugnummer; (iii) Transportunternehmen, z.B. Name der Fluggesellschaft bzw. deren Kennung; (iv) Zeitinformation, insbesondere ein Zeitstempel wie z.B. Durchleuchtungszeit oder Gepackstückaufgabe; (v) Ursprungsflughafen; (vi) Zielflughafen und/oder (vii) äußere Transportgutbehältermerkmale wie z.B. Größe, Form, Farbe, Material, Struktur, Defekte und/oder dergleichen. Durch Berücksichtigung dieser Transportdaten kann die Suche nach Besitzerinformationen eines herrenlos aufgefundenen Transportgutbehälters weiter eingeschränkt und damit beschleunigt werden.

Bei einem Verfahren zur Identifikation eines Transportgutbehälters auf Grundlage von, insbesondere durch das Verfahren gemäß dem ersten Aspekt der Erfindung bereitgestellter, Transportgutinformation gemäß einem zweiten Aspekt der Erfindung wird wenigstens ein Merkmal, welches zumindest einen Teil eines Inhalts des Transportgutbehälters charakterisiert, aus Durchleuchtungsdaten, die beim Durchleuchten des Transportgutbehälters erzeugt werden, extrahiert. Erfindungsgemäß wird der Transportgutbehälter anhand eines Vergleichs des extrahierten Merkmals mit in einer zentralen Datenbank gespeicherten Merkmalen identifiziert.

Ein aufgefundener Transportgutbehälter, z.B. ein Fluggepäckstück, der keinem Besitzer zugeordnet werden kann, wird vorzugsweise durchleuchtet, beispielsweise mittels Röntgenstrahlen. Dadurch kann ein Hinweis auf seinen Inhalt erhalten werden, der es ermöglicht, über einen entsprechenden Datenbankeintrag den korrekten Besitzer ausfindig zu machen bzw. den Transportgutbehälter als Transportgutbehälter einer bestimmten Person zu identifizieren.

In einer weiteren bevorzugten Ausführungsform wird beim Vergleichen ein Wert für ein Ähnlichkeitsmaß ermittelt, welches die Übereinstimmung des extrahierten Merkmals mit einem gespeicherten Merkmal charakterisiert. Vorzugsweise wird der Transportgutbehälter auf Grundlage des ermittelten Werts für das Ähnlichkeitsmaß identifiziert. Dadurch kann berücksichtigt werden, dass sich der Inhalt des Transportgutbehälters beim wiederholten Durchleuchten in den dabei erzeugten Durchleuchtungsdaten anders darstellt. Beispielsweise können Gegenstände im Transportgutbehälter anders positioniert und/oder anders im orientiert sein, z.B. durch Verrutschen. Dadurch kann im Allgemeinen keine vollkommene Übereinstimmung zwischen zu verschiedenen Zeitpunkten extrahierten Merkmalen festgestellt werden. Das Verwenden eines Ähnlichkeitsmaßes erlaubt es aber, trotzdem eine Zuordnung zwischen verschiedenen Transportgutbehälterinhalten herzustellen und somit beispielsweise den Transportgutbehälter als einer bestimmten Person zugehörig zu identifizieren.

Dabei kann es vorgesehen sein, dass der Transportgutbehälter als derjenige Transportgutbehälter identifiziert wird, für den das Ähnlichkeitsmaß einen besonders hohen Wert, vorzugsweise den höchsten Wert, insbesondere oberhalb eines Ähnlichkeitsschwellenwerts, annimmt.

In einer weiteren bevorzugten Ausführungsform wird einem Benutzer eine Auswahl an Transportgutbehältern, die mit den gespeicherten Merkmalen, mit denen das extrahierte Merkmal verglichen wird, korrespondierenden, auf Grundlage eines Ergebnisses des Vergleichs bereitgestellt. Beispielsweise können alle Transportgutbehälter bereitgestellt, d. h. dem Benutzer als Treffer vorgeschlagen, werden, für die Merkmale in der Datenbank gespeichert sind, die dem extrahierten Merkmal ähnlich sind. Dabei können insbesondere diejenigen Transportbehälter bereitgestellt bzw. vorgeschlagen werden, für welche beim Vergleichen der Merkmale das Ähnlichkeitsmaß einen vorgegebenen Ähnlichkeitsschwellenwert erreicht oder überschreitet. Dadurch ist es nicht mehr notwendig, dass der Benutzer manuell und zeitaufwendig Beschreibungen als verloren gemeldeter Transportgutbehälter durchgeht. Stattdessen kann aus allen Transportgutbehältern, deren Merkmale in der Datenbank gespeichert sind, diejenigen Transportgutbehälter ausgewählt werden, deren Inhalt zu einem Großteil mit dem Inhalt des aufgefundenen Transportgutbehälters übereinstimmt. Das Identifizieren des Transportgutbehälters kann so besonders effizient durchgeführt werden.

In einer weiteren bevorzugten Ausführungsform wird die Auswahl an Transportgutbehältern auf Grundlage von in der Datenbank gespeicherten und mit den Merkmalen verknüpften Transportdaten, welche die Transportgutbehälter charakterisieren, getroffen. Beispielsweise kann die Größe, Form, Farbe, Struktur und/oder Defekte der Transportgutbehälter beim Auswählen berücksichtigt werden. Dadurch ist es möglich, die Suche nach der Identität des Transportgutbehälters zu präzisieren und entsprechend zu verkürzen.

Beispielsweise ist es denkbar, anhand des Vergleichs der extrahierten Merkmale eine Auswahl an Transportgutbehältern zu treffen und diese Auswahl anhand des Erscheinungsbildes des zu identifizierenden Transportgutbehälters weiter einzuschränken. Alternativ oder zusätzlich kann die Auswahl auch aufgrund der durch Transportdaten gekennzeichneten Transportroute des entsprechenden Transportgutbehälters eingeschränkt werden, etwa indem Transportgutbehälter, deren Inhalt in Form von Merkmalen zu einem Zeitpunkt erfasst wurde, zu dem die Suche nach der Identität des zu identifizierenden Transportgutbehälters bereits begonnen hatte, nicht berücksichtigt werden.

In einer weiteren bevorzugten Ausführungsform wird eine Auswahl aus in der zentralen Datenbank gespeicherten Merkmalen auf Grundlage von Verlustinformation getroffen und das wenigstens eine extrahierte Merkmal mit der getroffenen Auswahl verglichen. Dadurch kann die Anzahl der vorzunehmenden Vergleiche, d.h. die beim Vergleichen zu durchsuchende Datenmenge, reduziert und somit eine Beschleunigung des Vergleichens erzielt werden.

Eine Verlustinformation kann beispielsweise Information zu den Umständen enthalten, unter denen der Transportgutbehälter aufgefunden wurde, zum Beispiel den Fundort und/oder die Fundzeit. Vorzugsweise wird die Verlustinformation dabei beim Zuordnen eines Verlustzustands erfasst. So ist es etwa denkbar, dass für einen Transportgutbehälter, dem ein Verlustzustand zugeordnet wurde, der Ort und/oder die Zeit, an dem die Zuordnung des Verlustzustands stattfand, festgestellt und zur Einschränkung des Suchraumes beim Vergleichen der Merkmale verwendet wird. Alternativ kann die Verlustinformation auch Information zum Ort und/oder der Zeit, an dem bzw. zu welcher der Transportgutbehälter erneut durchleuchtet wird, oder eine andere örtliche und/oder zeitliche Information enthalten.

Wenn beispielsweise ein Fluggepäckstück an einem Flughafen, z.B. aufgrund eines fehlenden oder beschädigten Bag-Tags, keinem Besitzer zugeordnet werden kann, wird in bevorzugter Weise der Fundort und die Fundzeit festgestellt. Das wenigstens eine nach einem erneuten Durchleuchten des Fluggepäckstücks extrahierte Merkmal kann dann ausschließlich mit den in der zentralen Datenbank gespeicherten Merkmalen verglichen werden, für welche der Fundort und die Fundzeit überhaupt in Frage kommt. Wenn z.B. aus Transportdaten, die in der zentralen Datenbank gespeichert und mit einem in der zentralen Datenbank gespeicherten Merkmal verknüpft sind, hervorgeht, dass das korrespondierende Gepäckstück zu einem Zeitpunkt an einem Ursprungsflughafen aufgegeben wurde, der so weit entfernt liegt, dass das Gepäckstück zur Fundzeit noch gar nicht am Fundort eingetroffen sein kann, braucht das korrespondierende Merkmal beim Vergleichen nicht berücksichtigt werden.

Ein System zur Bereitstellung von Transportgutinformation gemäß einem dritten Aspekt der Erfindung weist eine Extraktionsvorrichtung auf, die dazu eingerichtet ist, wenigstens ein Merkmal, welches zumindest einen Teil eines Inhalts eines Transportgutbehälters charakterisiert, aus Durchleuchtungsdaten, die beim Durchleuchten des Transportgutbehälters erzeugt werden, zu extrahieren. Erfindungsgemäß ist dabei eine zentrale Datenbank, zum Beispiel auf einem zentralen Server, dazu eingerichtet, das extrahierte Merkmal zu speichern.

Die zentrale Datenbank ist dabei vorzugsweise dazu eingerichtet, die in ihr gespeicherten Merkmale über ein Netzwerk, zum Beispiel das Internet, bereitzustellen. Dadurch kann auf die Datenbank bzw. die in ihr gespeicherten Merkmale zugegriffen werden, auch wenn sich der Aufgabe-, Umlade- und/oder Annahmeort in verschiedenen Teilen der Welt befinden.

Ein System zur Identifikation eines Transportgutbehälters auf Grundlage von, insbesondere durch ein System gemäß dem dritten Aspekt der Erfindung bereitgestellter, Transportgutinformation gemäß seinem vierten Aspekt der Erfindung weist eine Extraktionsvorrichtung auf, die dazu eingerichtet ist, wenigstens ein Merkmal, welches zumindest einen Teil eines Inhalts des Transportgutbehälters charakterisiert, aus Durchleuchtungsdaten, die beim Durchleuchten des Transportgutbehälters erzeugt werden, zu extrahieren. Erfindungsgemäß ist dabei eine Identifikationsvorrichtung dazu eingerichtet, den Transportgutbehälter anhand eines Vergleichs des extrahierten Merkmals mit in einer zentralen Datenbank gespeicherten Merkmalen zu identifizieren.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten, dritten und vierten Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- FIG 1: ein Beispiel eines Verfahrens zur Identifikation eines Transportgutbehälters;
- FIG 2: ein Beispiel eines Röntgenbilds und daraus extrahierten Merkmalen; und
- FIG 3: ein Beispiel eines Systems zur Identifikation eines Transportgutbehälters.

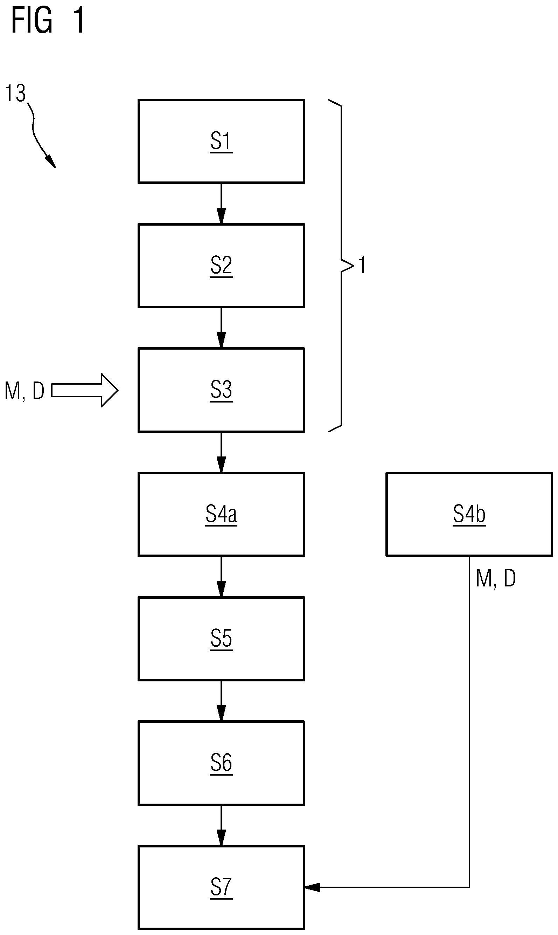

**FIG 1** zeigt ein Beispiel eines Verfahrens 13 zur Identifikation eines Transportgutbehälters, beispielsweise eines Gepäckstücks.

In einem Verfahrensschritt S1 wird der Transportgutbehälter durchleuchtet, etwa mittels einer HBS-Anlage (hold baggage screening) an einem Flughafen. Solche Anlagen sind standardmäßig an Flughäfen vorgesehen, um Gepäck auf sicherheitsrelevante Aspekte hin zu überprüfen. HBS-Anlagen liefern üblicherweise Röntgenbilder des durchleuchteten Gepäcks, auf denen der Inhalt des Gepäckstücks sichtbar ist.

Beim Durchleuchten, beispielsweise mittels Röntgenstrahlen, des Transportgutbehälters erzeugte Durchleuchtungsdaten, zum Beispiel ein Röntgenbild, können genutzt werden, um den Transportgutbehälter nicht nur bezüglich sicherheitsrelevanter Aspekte zu überprüfen, sondern auch wenigstens ein Merkmal, das zumindest einen Teil des Inhalts des Transportgutbehälters charakterisiert, zu ermitteln. Die Extraktion des wenigstens einen Merkmals wird in einem weiteren Verfahrensschritt S2 durchgeführt. Dies kann beispielsweise durch einen Algorithmus zur digitalen Bildverarbeitung wie z.B. SIFT (scale-invariant feature transform) erreicht werden, der zumindest innerhalb gewisser Grenzen in bevorzugter Weise invariant gegenüber Koordinatentransformationen wie Translation, Rotation, Skalierung und/oder dergleichen ist sowie robust gegen Beleuchtungsvariation, Bildrauschen und geringere geometrische Deformationen höherer Ordnung und/oder dergleichen. Die derart ausgeführte Extraktion ist daher in bevorzugter Weise reproduzierbar, d.h. die selben Merkmale können aus zu einem späteren Zeitpunkt abermals erzeugten Durchleuchtungsdaten erneut extrahiert werden, selbst wenn sich das Erscheinungsbild des Inhalts zum Beispiel durch Verrutschen oder durch eine andere Orientierung des Transportgutbehälters verändert hat.

Alternativ kann auch ein anderer Algorithmus verwendet werden, oder eine Modifikation von SIFT, z.B. SURF (speeded up robust features), Affine-SIFT, PCA-SIFT und/oder dergleichen, so lange wenigstens ein für zumindest einen Teil des Transportgutbehälterinhalts charakteristisches Merkmal reproduzierbar ermittelt bzw. extrahiert werden und daher zur Identifikation, z.B. zum Wiederauffinden, verwendet werden kann.

Vorzugsweise wird im Verfahrensschritt S2 eine Merkmalskombination von Merkmalen verschiedener Gegenstände auf Grundlage der Durchleuchtungsdaten ermittelt bzw. daraus extrahiert. Eine solche Merkmalskombination erlaubt eine besonders zuverlässige Charakterisierung zumindest eines Teils des Inhalts des Transportgutbehälters.

Im Verfahrensschritt S3 wird das wenigstens eine extrahierte Merkmal in einer zentralen Datenbank, zum Beispiel auf einem Server, gespeichert. Auf die zentrale Datenbank und die darin gespeicherten Merkmale kann vorzugsweise durch ein Netzwerk, zum Beispiel das Internet, zugegriffen werden. Insbesondere kann auf die zentrale Datenbank von verschiedenen Orten weltweit, zum Beispiel von verschiedenen Flughäfen, an denen verlorene Gepäckstücke gefunden werden könnten, zugegriffen werden. In der Datenbank bleiben die Merkmale vorzugsweise für eine vorbestimmte erste Zeitdauer, insbesondere für eine Transportdauer des Transportgutbehälters, gespeichert, sodass auf die Merkmale auch noch nach dem Transport des Transportgutbehälters zugegriffen werden kann.

Vorzugsweise werden im Verfahrensschritt S3 auch personenbezogene Daten D einer Person, die mit dem Transportgutbehälter transportiert wird oder werden soll, erfasst und ebenfalls in der zentralen Datenbank gespeichert. Dabei können die personenbezogenen Daten D der Person, zum Beispiel des Besitzers oder der Besitzerin des Transportgutbehälters, mit dem wenigstens einen extrahierten Merkmal verknüpft werden. Es ist beispielsweise denkbar, in der zentralen Datenbank für jeden durchleuchteten Transportgutbehälter einen Datensatz anzulegen, in dem sowohl die extrahierten Merkmale enthalten sind bzw. gespeichert werden als auch die personenbezogenen Daten D.

Solche personenbezogenen Daten D können beispielsweise den Namen und/oder die Adresse der Person enthalten. Alternativ oder zusätzlich können die Daten D auch eine Fluggastnummer und/oder Flugnummer der Person und/oder den Namen einer Fluggesellschaft, die für den Transport zuständig ist, enthalten.

Alternativ oder zusätzlich können im Verfahrensschritt S3 auch Transportdaten M erfasst und/oder in der zentralen Datenbank gespeichert werden. Solche Transportdaten M können den Transportgutbehälter, insbesondere unabhängig von seinem Inhalt, charakterisieren und beispielsweise Information zu seiner Form, Farbe, Struktur, möglichen Defekten und/oder dergleichen enthalten. Alternativ oder zusätzlich können die Transportdaten M auch Information zur geplanten Transportroute und/oder der dabei erfolgten Verarbeitung des Transportgutbehälters enthalten, zum Beispiel in Form von Angaben zum Zielflughafen, zum Ursprungsflughafen, zum Zeitpunkt der Gepäckaufgabe, zum Zeitpunkt des Durchleuchtens und/oder dergleichen. Diese Transportdaten M werden vorzugsweise ebenfalls mit den extrahierten Merkmalen verknüpft, zum Beispiel indem sie im gleichen Datensatz enthalten sind bzw. gespeichert werden.

Die Verfahrensschritte S1-S3 bilden zusammen vorzugsweise ein Verfahren zur Bereitstellung von Transportgutinformation, welches Teil des Verfahrens 13 zur Identifikation eines Transportgutbehälters sein kann.

Wenn der Transportgutbehälter beim Transport verloren geht, zum Beispiel weil Transportpapiere wie ein Bag-Tag abhanden kommen oder beschädigt werden oder der Transportgutbehälter versehentlich falsch verladen wird, zum Beispiel in ein falsches Flugzeug, wird er üblicherweise zu einem späteren Zeitpunkt im Verfahrensschritt S4a aufgefunden und/oder der Besitzer oder die Besitzerin bemerkt sein Fehlen im Verfahrensschritt S4b. Ein solcher "herrenlos" aufgefundener bzw. zunächst nicht identifizierbarer Transportgutbehälter kann im Verfahrensschritt S5 ein weiteres Mal durchleuchtet werden, um erneut Durchleuchtungsdaten zu erzeugen und im Verfahrensschritt S6 das wenigstens eine, zumindest einen Teil des Transportgutbehälterinhalts charakterisierende Merkmal auf Grundlage der Durchleuchtungsdaten zu ermitteln bzw. daraus zu extrahieren.

Ein verloren gegangenes bzw. nicht identifizierbares Fluggepäckstück wird zum Beispiel am Zielflughafen der Lost-and-Found-Abteilung zugestellt, welche es erneut durch eine HBS-Anlage führt.

Im Verfahrensschritt S7 wird das wenigstens eine erneut extrahierte Merkmal vorzugsweise mit den in der zentralen Datenbank gespeicherten Merkmalen verglichen. Liegt bezüglich eines in der Datenbank gespeicherten Merkmals eine Übereinstimmung vor, kann der in Verfahrensschritt S4a aufgefundene Transportgutbehälter entsprechend identifiziert werden. Über die vorzugsweise ebenfalls in der Datenbank gespeicherten und mit den Merkmalen verknüpften personenbezogenen Daten D kann der Besitzer des verlorenen Transportgutbehälters leicht ermittelt und kontaktiert bzw. ihm der Transportgutbehälter zugestellt werden. Alternativ oder zusätzlich kann anhand der Transportdaten M der Transport des Transportgutbehälters fortgeführt werden.

Bemerkt die Person in Verfahrensschritt S4b den Verlust des Transportgutbehälters, kann sie ihn, z.B. an der Lost-and-Found-Abteilung ihres Zielflughafens, als verloren melden. Dem Transportgutbehälter wird dann in bevorzugter Weise ein Verlustzustand zugeordnet und in der zentralen Datenbank eine entsprechende Zustandskennung mit dem in Verfahrensschritt S3 gespeicherten Merkmal verknüpft. Die Zuordnung der Person zum entsprechenden in der Datenbank gespeicherten Merkmal kann dabei zum Beispiel über die personenbezogenen Daten D hergestellt werden.

Beispielsweise kann im entsprechenden Datensatz eine entsprechende Angabe zum Verlustzustand enthalten sein bzw. hinzugefügt werden. Dadurch wird es möglich, beim Vergleichen des extrahierten Merkmals in Verfahrensschritt S7 lediglich diejenigen in der Datenbank gespeicherten Merkmale heranzuziehen, die mit einer entsprechenden Zustandskennung verknüpft und deren korrespondierende Transportgutbehälter dadurch als tatsächlich gesucht markiert sind, so dass die Suche nach dem übereinstimmenden Merkmal deutlich effizienter wird.

Alternativ oder zusätzlich ist es auch möglich, dass die Person in Verfahrensschritt S4b Angaben zum vermissten Transportgutbehälter macht, die den Transportdaten D entsprechen. Dies ist besonders vorteilhaft, wenn solche Transportdaten D, insbesondere Information zu Form, Farbe, Struktur, möglichen Defekten des Transportgutbehälters und/oder dergleichen, nicht bereits in der Datenbank gespeichert sind bzw., zum Beispiel im Rahmen von Verfahrensschritt S3, gespeichert wurden. Die Transportdaten D können dann beim Identifizieren des Transportgutbehälters mit berücksichtigt werden. Beispielsweise kann die Identifikation auf Grundlage der Transportdaten D erfolgen, wenn der Vergleich des in Verfahrensschritt S6 extrahierten Merkmals mit den in der Datenbank gespeicherten Merkmalen keine eindeutige Identifikation zulässt, sondern anhand des Vergleichs lediglich eine Auswahl aus Transportgutbehältern, mit denen die in der Datenbank gespeicherten Merkmale korrespondieren, bereitgestellt werden kann. Insbesondere kann diese Auswahl durch die von der Person in Verfahrensschritt S4b angegebenen Transportdaten D weiter eingeschränkt werden.

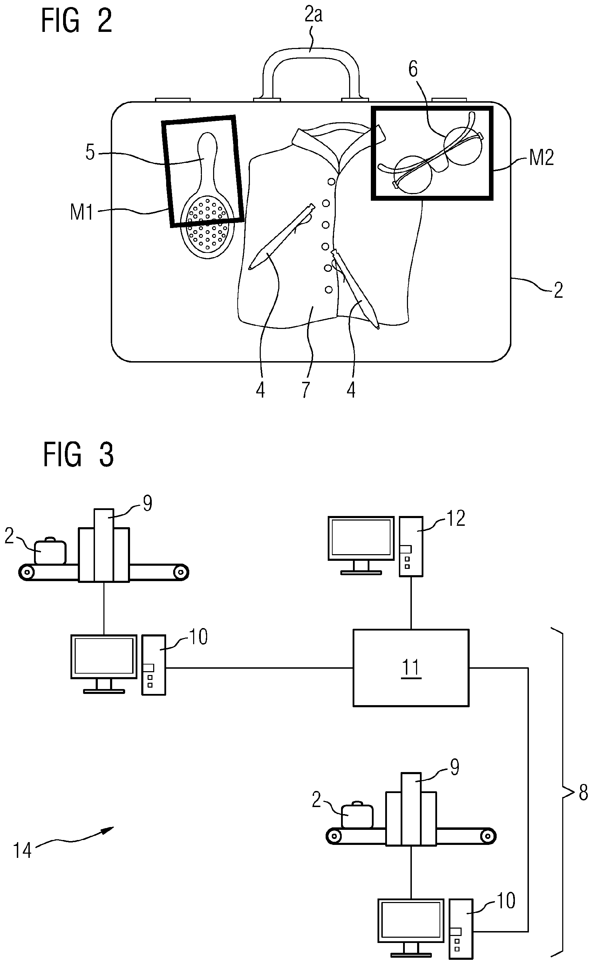

**FIG 2** zeigt ein Beispiel von Durchleuchtungsdaten 3 und daraus extrahierten Merkmalen, die zumindest einen Teil des Inhalts eines Transportgutbehälters 2 charakterisieren. Im vorliegenden Beispiel entsprechen die Durchleuchtungsdaten 3 einem Röntgenbild, das zum Beispiel von einer HBS-Anlage (hold baggage screening) an einem Flughafen beim Durchleuchten von Fluggepäck aufgenommen wurde. Der Transportgutbehälter 2 entspricht hierbei einem Koffer mit einem Griff 2a, der verschiedene Gegenstände 4-7 enthält.

Im Röntgenbild sind beispielsweise zwei Stifte 4, der Griff einer Haarbürste 5, eine Brille 6 sowie ein Teil eines oder mehrerer Textilien 7 sichtbar. Mittels einem entsprechenden Algorithmus zur digitalen Bildverarbeitung, beispielsweise SIFT (scale-invariant feature transform), können diese Gegenstände 4-7 oder zumindest Teile davon als Merkmale (M1, M2) aus den Durchleuchtungsdaten 3 extrahiert werden. Dabei werden in bevorzugter Weise diejenigen Merkmale (M1, M2) ermittelt bzw. extrahiert, die charakteristisch für den Inhalt oder zumindest einen Teil des Inhalts des Transportgutbehälters 2 sind.

Im gezeigten Beispiel wurden die Merkmale (M1, M2) der durch schwarze Rechtecke markierten Gegenstände 5, 6 extrahiert. Während Textilien 7 und Stifte 4 von Reisenden oft in ihren Koffern und Taschen mitgeführt werden und aufgrund ihrer ähnlichen Form und/oder Struktur schlecht voneinander unterscheidbar sind, eignen sich Gegenstände wie Haarbürsten 5 und Brillen 6 aufgrund ihrer Variationen in Form und/oder Struktur deutlich besser, um den Transportgutbehälter 2 anhand des Inhalts zu identifizieren.

**FIG 3** zeigt ein Beispiel eines Systems 14 zur Identifikation eines Transportgutbehälters 2, zum Beispiel eines Gepäckstücks. Das System 8 weist im gezeigten Beispiel Durchleuchtungsvorrichtungen 9 auf, die dazu eingerichtet sind, den Transportgutbehälter 2 zu durchleuchten und dabei entsprechende Durchleuchtungsdaten zu erzeugen. Das System weist ferner Extraktionsvorrichtungen 10 auf, die dazu eingerichtet sind, wenigstens ein Merkmal, das zumindest einen Teil eines Inhalts des Transportgutbehälters 2 charakterisiert, aus den Durchleuchtungsdaten zu extrahieren. Die Extraktionsvorrichtungen 10 sind mit einer zentralen Datenbank 11, zum Beispiel einem Server, verbunden, in der das wenigstens eine extrahierte Merkmal gespeichert werden kann.

Die Durchleuchtungsvorrichtungen 9 sowie die Extraktionsvorrichtungen 10 können dabei räumlich verteilt sein, zum Beispiel an verschiedenen Standorten angeordnet. Zum Beispiel können die Durchleuchtungsvorrichtungen 9 als HBS-Anlagen (hold baggage screening) ausgebildet sein, welche Gepäckstücke an Flughäfen mit Röntgenstrahlen durchleuchten und entsprechende Röntgenbilder erzeugen. Die HBS-Anlagen sind dabei weltweit über die verschiedenen Flughäfen verteilt. Gleiches gilt für die Extraktionsvorrichtungen 10, die zum Beispiel als Datenverarbeitungseinrichtungen wie Personalcomputer ausgebildet sein können. Somit kann weltweit auf jedem Flughafen jedes Gepäckstück anhand von Merkmalen, die seinen Inhalt oder zumindest einen Teil davon charakterisieren, erfasst werden.

Die Extraktionsvorrichtungen 10 bilden mit der zentralen Datenbank 11 vorzugsweise ein System 8 zur Bereitstellung von Transportgutinformation. Dieses System 8 kann Teil des Systems 14 zur Identifikation eines Transportgutbehälters 2 sein.

Werden durch eine Extraktionsvorrichtung 10 Merkmale aus den bei der Durchleuchtung eines Transportgutbehälters 2 erzeugten Durchleuchtungsdaten extrahiert und in der zentralen Datenbank 11 gespeichert, kann dieser Transportgutbehälter 2 zu einem späteren Zeitpunkt an einem anderen Ort, zum Beispiel an einem anderen Flughafen, durch erneute Durchleuchtung und darauf folgende Extraktion der Merkmale aus den entsprechenden Durchleuchtungsdaten identifiziert werden. Dazu kann das nach der erneuten Durchleuchtung extrahierte Merkmal mit den in der zentralen Datenbank 11 gespeicherten Merkmalen von einer mit der zentralen Datenbank verbundenen Identifikationsvorrichtung 12 verglichen werden. Die Identifikationsvorrichtung 12 ist dabei vorzugsweise dazu eingerichtet, auf eine Vielzahl in der Datenbank 11 gespeicherten Merkmale, die beim Durchleuchten einer Vielzahl von Transportgutbehältern 2 extrahiert wurden, zuzugreifen.

Vorzugsweise sind die Extraktionsvorrichtungen 10 auch dazu eingerichtet, personenbezogene Daten einer Person, die mit dem Transportgutbehälter 2 transportiert wird bzw. werden soll, zu erfassen und ebenfalls in der zentralen Datenbank 11 zu speichern und mit dem wenigstens einen entsprechenden extrahierten Merkmal zu verknüpfen. Beispielsweise kann ein Bag-Tag, dass am Transportgutbehälter 2 befestigt ist, beim Durchleuchten von der Durchleuchtungsvorrichtung 9 ausgelesen und die darauf enthaltenen personenbezogenen Daten an der Extraktionsvorrichtung 10 bereitgestellt werden. Alternativ können solche Daten aber auch anderweitig, zum Beispiel separat, erfasst, in der Datenbank 11 gespeichert und dort mit den extrahierten Merkmalen verknüpft werden.

Wird zu einem späteren Zeitpunkt von einer anderen Extraktionsvorrichtung 10 dasselbe Merkmal extrahiert und in der Datenbank 11 von der Identifikationsvorrichtung 12 das eingangs gespeicherte und mit den personenbezogenen Daten verknüpfte Merkmal anhand eines Vergleichs gefunden, kann über die personenbezogenen Daten leicht der Besitzer des Transportgutbehälters 2 ermittelt werden.

Im dargestellten Beispiel sind Extraktionsvorrichtungen 10 und die Identifikationsvorrichtung 12 als separate Vorrichtungen dargestellt. Es ist aber auch denkbar, die Identifikationsvorrichtung 12 in die Extraktionsvorrichtungen 10 zu integrieren. Insbesondere ist es möglich, die Extraktionsvorrichtungen 10 und die Identifikationsvorrichtung 12 jeweils als Softwaremodul auszubilden und an verschiedenen Standorten, zum Beispiel verschiedenen Flughäfen, mittels einer entsprechenden Datenverarbeitungsvorrichtung wie einem Personalcomputer auszuführen.

Dabei ist es auch möglich, die Extraktionsvorrichtungen 10 als eine zentrale Extraktionsvorrichtung (nicht gezeigt) vorzusehen, die zum Beispiel als Softwaremodul mit der zentralen Datenbank 11 gemeinsam auf einem zentralen Server ausgeführt wird. Die Durchleuchtungsvorrichtungen 9 können in diesem Fall dazu eingerichtet sein, die Durchleuchtungsdaten an die zentrale Extraktionsvorrichtung zu übermitteln, so dass das wenigstens eine Merkmal extrahiert und direkt in der zentralen Datenbank 11 gespeichert bzw. mit anderen bereits in der zentralen Datenbank 11 gespeicherten Merkmalen verglichen werden kann.

### Bezugszeichenliste

- 1: Verfahren zur Bereitstellung von Transportgutinformation
- 2: Transportgutbehälter
- 2a: Griff
- 3: Durchleuchtungsdaten
- 4: Stift
- 5: Haarbürste
- 6: Brille
- 7: Textil
- 8: System zur Bereitstellung von Transportgutinformation
- 9: Durchleuchtungsvorrichtung
- 10: Extraktionsvorrichtung
- 11: zentrale Datenbank
- 12: Identifikationsvorrichtung
- 13: Verfahren zur Identifikation eines Tranportgutbehälters
- 14: System zur Identifikation eines Transportgutbehälters

- S1-S7: Verfahrensschritte

- M1, M2: Merkmal

## Patentansprüche

1. Verfahren (1) zur Bereitstellung von Transportgutinformation, wobei wenigstens ein zumindest einen Teil eines Inhalts eines Transportgutbehälters (2) charakterisierendes Merkmal (M1, M2) aus Durchleuchtungsdaten (3), die beim Durchleuchten (S1) des Transportgutbehälters (2) erzeugt werden, extrahiert wird (S3),
**dadurch gekennzeichnet,**
**dass** das extrahierte Merkmal (M1, M2) in einer zentralen Datenbank (11) gespeichert wird (S3).

2. Verfahren (1) nach Anspruch 1, **dadurch gekennzeichnet, dass** aus den Durchleuchtungsdaten (3) eine Merkmalskombination aus Merkmalen verschiedener Gegenstände (4-7) extrahiert wird, anhand welcher der Transportgutbehälter (2) identifizierbar ist.

3. Verfahren (1) nach einem der Ansprüche 1 oder 2, **dadurch gekennzeichnet, dass** der Transportgutbehälter (2) für eine Transportdauer transportiert wird und das extrahierte Merkmal (M1, M2) für wenigstens die Transportdauer gespeichert wird.

4. Verfahren (1) nach einem der vorangehenden Ansprüche,
**dadurch gekennzeichnet, dass** der Transportgutbehälter (2) einer zu transportierenden Person zugeordnet wird und auf diese Person bezogene Daten (D) ebenfalls in der zentralen Datenbank (11) gespeichert und mit dem extrahierten Merkmal (M1, M2) verknüpft werden.

5. Verfahren (1) nach einem der vorangehenden Ansprüche, wobei dem Transportgutbehälter (2) ein Verlustzustand zugeordnet und eine entsprechende Zustandskennung in der zentralen Datenbank (11) mit dem gespeicherten Merkmal (M1, M2) verknüpft wird.

6. Verfahren (1) nach einem der vorangehenden Ansprüche,
**dadurch gekennzeichnet, dass** das extrahierte Merkmal (M1, M2) in Abhängigkeit eines dem Transportgutbehälter (2) zugeordneten Verlustzustands zusätzlich zur Transportdauer für eine vorbestimmte zusätzliche Zeitdauer gespeichert wird.

7. Verfahren (1) nach einem der vorangehenden Ansprüche,
**dadurch gekennzeichnet, dass** Transportdaten (M), welche den Transportgutbehälter (2) charakterisieren, in der zentralen Datenbank (11) gespeichert und mit dem extrahierten Merkmal (M1, M2) verknüpft werden.

8. Verfahren (1) nach einem der vorangehenden Ansprüche,
**dadurch gekennzeichnet, dass** wenigstens eines der Folgenden in der zentralen Datenbank (11) gespeichert und mit dem extrahierten Merkmal (M1, M2) verknüpft wird:
- Fluggastnummer;
- Flugnummer;
- Transportunternehmen
- Zeitinformation;
- Ursprungsflughafen;
- Zielflughafen und/oder
- äußere Transportgutbehältermerkmale.

9. Verfahren (13) zur Identifikation eines Transportgutbehälters (2) auf Grundlage von Transportgutinformation, wobei wenigstens ein zumindest einen Teil eines Inhalts des Transportgutbehälters (2) charakterisierendes Merkmal (M1, M2) aus Durchleuchtungsdaten (3), die beim Durchleuchten (S5) des Transportgutbehälters (2) erzeugt werden, extrahiert wird (S6),
**dadurch gekennzeichnet,**
**dass** der Transportgutbehälter (2) anhand eines Vergleichs des extrahierten Merkmals (M1, M2) mit in einer zentralen Datenbank (11) gespeicherten Merkmalen (M1, M2) identifiziert wird (S7).

10. Verfahren (13) nach Anspruch 9, wobei beim Vergleichen ein Wert für ein Ähnlichkeitsmaß ermittelt wird, welches die Übereinstimmung des extrahierten Merkmals (M1, M2) mit einem gespeicherten Merkmal (M1, M2) charakterisiert, und der Transportgutbehälter (2) auf Grundlage des ermittelten Werts identifiziert wird.

11. Verfahren (13) nach einem der Ansprüche 9 oder 10, **dadurch gekennzeichnet, dass** einem Benutzer eine Auswahl an mit den gespeicherten Merkmalen (M1, M2), mit denen das extrahierte Merkmal (M1, M2) verglichen wird, korrespondierenden Transportgutbehältern (2) auf Grundlage eines Ergebnisses des Vergleichs bereitgestellt wird.

12. Verfahren (13) nach Anspruch 11, **dadurch gekennzeichnet, dass** die Auswahl an Transportgutbehältern (2) auf Grundlage von in der Datenbank (11) gespeicherten und mit den Merkmalen (M1, M2) verknüpften Transportdaten(M), welche die Transportgutbehälter (2) charakterisieren, getroffen wird.

13. Verfahren (13) nach einem der Ansprüche 9 bis 12, **dadurch gekennzeichnet, dass** eine Auswahl aus in der zentralen Datenbank (11) gespeicherten Merkmalen (M11, M2) auf Grundlage von Verlustinformation getroffen und das wenigstens eine extrahierte Merkmal (M1, M2) mit der getroffenen Auswahl verglichen wird.

14. System (8) zur Bereitstellung von Transportgutinformation, aufweisend eine Extraktionsvorrichtung (10), die dazu eingerichtet ist, wenigstens ein zumindest einen Teil eines Inhalts eines Transportgutbehälters (2) charakterisierendes Merkmal aus Durchleuchtungsdaten (3), die beim Durchleuchten des Transportgutbehälters (2) erzeugt werden, zu extrahieren,
**gekennzeichnet durch**
eine zentrale Datenbank (11), die dazu eingerichtet ist, das extrahierte Merkmal zu speichern.

15. System (14) zur Identifikation eines Transportgutbehälters (2) auf Grundlage von Transportgutinformation, aufweisend eine Extraktionsvorrichtung (10), die dazu eingerichtet ist, wenigstens ein Merkmal (M1, M2), welches zumindest einen Teil eines Inhalts des Transportgutbehälters (2) charakterisiert, aus Durchleuchtungsdaten, die beim Durchleuchten des Transportgutbehälters (2) erzeugt werden, zu extrahieren
**gekennzeichnet durch**
eine Identifikationsvorrichtung (12), die dazu eingerichtet ist, den Transportgutbehälter (2) anhand eines Vergleichs des extrahierten Merkmals (M1, M2) mit in einer zentralen Datenbank (11) gespeicherten Merkmalen (M1, M2) zu identifizieren.
